# EUROPEAN PATENT APPLICATION

(11) **EP 2 269 607 A1**
(43) Date of publication of application: **05.01.2011**
(21) Application number: 09162470.0
(22) Date of filing: 11.06.2009
(51) Int. Cl.: A61K 31/455, A61K 36/48, A23L 1/30

(54) **Trigonelline as a muscle stimulant**

(71) Applicant: DSM IP Assets B.V., 6411 TE Heerlen (NL)
(72) Inventor: The designation of the inventor has not yet been filed
(74) Representative: Mezger, Wolfgang

(57) **Abstract**

This invention relates to the use of trigonelline compounds to increase muscle weight during periods of activity or to inhibit muscle loss during periods of inactivity.

## Description

### FIELD OF THE INVENTION

This invention relates to the use of trigonelline compounds to increase muscle weight during periods of activity or to inhibit muscle loss during periods of inactivity.

### BACKGROUND OF THE INVENTION

One of the most characteristic features of skeletal muscle is its remarkable ability to adapt to different stimuli. Throughout life the skeletal muscle is permanently adapting to internal (ageing/sarcopenia resulting in muscle loss) or external changes (physical activity results in muscle hypertrophy; while injury results in muscle recovery; and bed rest results in muscle atrophy). These influences modify structural, biochemical and molecular variables of the different skeletal muscle fibers. For the adaptation of myofibers the activation and myogenic differentiation of satellite cells, the so-called stem cells of the skeletal muscle, are required. After exercise training, for example, satellite cells fuse together with the enlarging or repairing myofibers.

Trigonelline is an alkaloid with chemical formula C₇H₇NO₂. Trigonelline is a niacin (vitamin B3) metabolite which is excreted in the urine. Trigonelline is also found in coffee, where it may help to prevent dental caries by preventing the bacteria *Streptococcus mutans* from adhering to teeth.

US 2005/0226948 (Lee et al) discloses a Fenugreek seed extract containing 4-hydroxyisoleucine and a number of other compounds, including trigonelline. These combinations are used to enhance glucose transport into muscle cells. US2007/0105793 (Hendrix) discloses a composition useful for treatment of hyperlipidemia, hypercholesterolemia and hyperglyceridemia that contains niacin and derivatives.

US2007/0259861 (Krantz) discloses compositions containing a non-steroidal antinflammatory drug (NSAID) in combination with a prostaglandin mimetic (which can include various niacin derivatives. These combinations are used for pain and/or inflammation relief.

### DESCRIPTION OF THE INVENTION

It has been found, in accordance with this invention that trigonelline can increase muscle weight during a training period, and can reduce muscle loss during periods of lesser activity or immobility. Thus, one aspect of this invention is the use of trigonelline, and/or a salt or ester thereof, in the manufacture of a nutraceutical or food to increase muscle weight during training, or to reduce the amount of muscle loss during inactivity. Another aspect of this invention is a method of increasing muscle mass during exercise comprising administering an effective amount of trigonelline or salt or ester thereof to an individual undergoing training. A further aspect of this invention is a method of reducing the muscle loss of a less active or immobile person at risk of muscle loss by administering trigonelline or a salt or ester thereof.

### BRIEF DESCRIPTION OF THE FIGURES

FIGURE 1 shows the results of *in vitro* effects of trigonelline on myotube formation in mouse muscle cells.
FIGURE 2 shows wet weight of the gastrocnemius muscle relative to body weight (BW) from control and treated mice (hypertrophy model).
FIGURE 3 shows results of the tail suspension model gastrocnemius muscle wet weight relative to BW for control and treated mice.
FIGURE 4 shows wet weight of gastrocnemius muscle after treadmill running.

As used throughout the specification and claims, the following definitions apply: "Trigonelline" refers to any form of trigonelline suitable for a nutraceutical, including trigonelline, and trigonelline hydrate of a trigonelline salt or ester.

"Trigonelline salt or ester" refers to any salt or ester form of trigonelline which can be used to formulate trigonelline into a nutraceutically acceptable form, or into a foodstuff. The salt or ester should be one which is allowable for ingestion by the applicable regulatory agency. Examples of suitable trigonelline salts include sulfate, hydrogen sulfate, chloride, phosphate, and citrate. Examples of suitable trigonelline esters include the methyl ester chloride, and ethyl ester chloride.

"Prevent" includes reduction of severity of symptoms and or conditions, reducing the risk of developing a symptom or condition, increasing the time before symptoms or conditions develop, early intervention, as well as negation of a symptom or condition.

Trigonelline can be found in a large variety of plants such as green and roasted coffee beans, *Trigonella foenum graecum* (fenugreek, Leguminosae), *Schumanniophyton magnificum*, (Rubiaceae) *Mappia foetida,* and *Strophanthus spp.,* to name just a few. Thus, trigonelline may be present in a plant extract. Preferably, if using a plant extract as the source of trigonelline, the plant extract contains at least about 20 wt % of trigonelline.

Alternatively, trigonelline can be made synthetically from nicotinic acid. An example of a synthesis is DE 344030 (1921) "Betaines of the pyridine series" (Merck, E.).

It was found that trigonelline can boost the weight of muscles when used in combination with exercise, and that it can delay the onset of muscle atrophy when muscle is not being used or not being used strenuously.

As trigonelline has applications in veterinary medicine as well as human medicine, another aspect of this invention is the use of trigonelline to improve muscle health in non-human animals, particularly racing horses, dogs, camels or other animals used for racing or as pack animals, or other animals used for their strength. The trigonelline can be administered to healthy animals, or to injured/sick animals to speed their convalescence.

Trigonelline or a salt or ester thereof has these specific benefits:
- Helps to prevent muscle loss
- Supports healthy muscle function together with exercise
- Helps to prevent sarcopenia (risk reduction, reduce severity, delay progression)
- Helps to prevent muscle loss during illness or after surgery, thus contributing to faster convalescence and shorter hospital stays
- Helps to prevent frailty in elderly, thus contributing to improved mobility, quality of life and helps to postpone loss of independent living
- Helps one retain muscle development when circumstances prevent one from exercising
- Supports an efficient exercise program
- Supports recovery from muscle damage
- Helps one retain exercise success /training effects longer
- Helps one maintain one's shape/condition longer
- Helps you to find the physical power you need
- Improves body composition together with exercise
- Supports body toning and body shaping
- Promotes myoblast differentiation
- Promotes muscle recovery and repair
- Promotes muscle hypertrophy, when combined with exercise

We surprisingly found that trigonelline helps when the skeletal muscle is adapting to stimuli like training - muscle load (hypertrophy) or to unloading (atrophy). It helps to strengthen the effects of training and prevents skeletal muscle loss. Therefore trigonelline supports an efficient training program and promotes muscle hypertrophy when combined with exercise/muscle loading.

Thus trigonelline helps to prevent sarcopenia, frailty in elderly, and muscle loss during bed rest due to illness, surgery and longer hospital stays. Furthermore, trigonelline promotes muscle recovery and repair.

### DOSAGES:

While dosages may vary, they may range from at least 5 mg per day for a human; preferably from 5 to 5,000 mg/day for a human, more preferably from 10 to 3000 mg/day for a human and even more preferably from 50-500 mg/day for a human. Animal dosages are similar, and can be adjusted accordingly for the weight of the animal.

In accordance with this invention, the trigonelline or salt or ester thereof is present in a dietary, nutraceutical, or pharmaceutical composition. Preferred compositions comprise trigonelline or a salt or ester thereof and a suitable dietary, nutraceutical or pharmaceutical carrier. The dietary products or nutraceuticals of this invention can be in any format acceptable to the consumer, including functional food and beverages.

Examples of suitable nutritional formats include various foods and beverages, including shots, cereal or other bars, drinks, protein-rich drinks, supplements, instant beverages, effervescents and the like. Especially preferred are formats which are suitable for sports nutrition, including beverages, protein powders, bars, supplements and instant beverages.

The following non-limiting Examples are presented to better illustrate the invention.

### EXAMPLE 1

### Muscle Cell Model

We first tested the influence of trigonelline on myoblast differentiation *in vitro* using C2C12 mouse myoblast cells which are commonly used to study muscle adaptation. C2C12 cells were seeded on 96 well collagen-I plates (1600cells/well) in growth medium (Dulbecco's modified Eagle's medium (DMEM) supplemented with 10% FBS, 2mM L-Glutamine, 1mM pyruvate, 50IU/ml penicillin, 50ug/ml streptavidin) until it reaches100% confluency, approximately 3 days. Cells were then induced to differentiate using differentiation medium (DMEM, 2%FBS, 2mM L-Glutamine, 1mM pyruvate, 50IU/ml penicillin, 50ug/ml streptavidin) with either DMSO (control) or 10 µg/ml trigonelline monohydrate for 24h. Final DMSO concentration was standardized to 0.5% in all wells. Cells were cultured at 37°C, with 5% CO2.

Cells were fixed with 3.7% formaldehyde solution (37% formaldehyde diluted in growth medium, sterile filtered before used) for 10 min. at room temperature, and washed twice with 1x DPBS (1x Dulbecco's Phosphate Buffered Saline). After permeabilization with 0.1% TritonX-100 (diluted in 1x DPBS) for 2 min. the samples were blocked with 1x DPBS plus 2% BSA for 1h. For myocyte labelling, the cells were labelled with 1:20 anti-alpha-myosin heavy chain antibody (MF-20) for 1hour. The samples were washed with 1x DPBS and fluorescently labelled with secondary antibody (1:250 Alexa 488 IgG antimouse secondary antibody plus 1:2000 Hoechst in 1x DPBS) for 1h. Finally, the cells were washed twice with 1x DPBS and plates were sealed for imaging on the ArrayScan® HCS Reader.

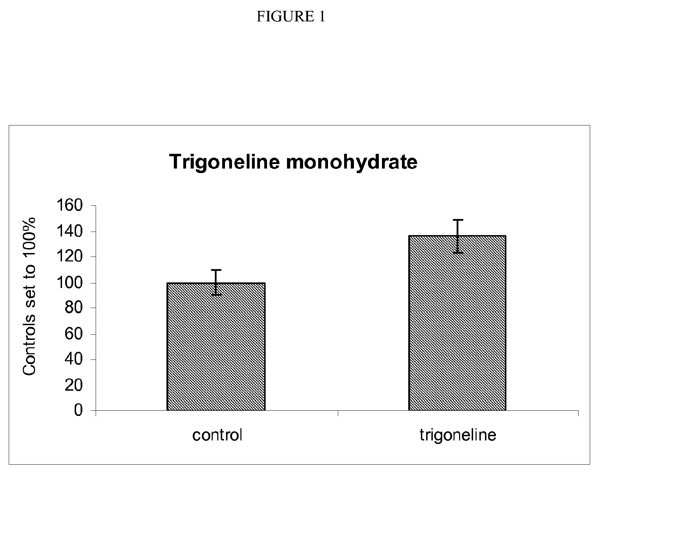

For image analysis myosin labelled myotubes were quantified on the ArrayScan HCS Reader using BioApplication Morphology Explorer.V2. Myocytes were selected with Object Area larger than 500 and Object Total Intensity greater than 1000. The number of myocytes from triplicate samples are shown in FIGURE 1. Trigonelline was seen to increase the differentiation in C2C12 mouse myoblast cells by 36%.

### EXAMPLE 2

### In Vivo Effects

To confirm our in vitro results, trigonelline was first tested in a hypertophy animal model to see the effects during muscle load. The gastrocnemius muscle from one hindlimb of the animals was removed to induce compensatory hypertrophy in the plantaris and soleus muscles by multiple mechanisms. This model increases the muscle weight under muscle load/training. It simulates the human condition of an average human who is physically active or an athlete to support skeletal muscle function during exercise.

Female C57B1/6 mice were delivered at a weight of 18-20 g and acclimatized to the facilities for a period of one week. At the beginning of the study the animals were randomized into two groups (10 animals per group).

The animals were anesthetized and the left hindlimb of the animals was fixed. A small incision was made through the skin over the gastrocnemius muscle. The complete gastrocnemius muscle and its tendons were exposed. Both heads of the gastrocnemius muscle were carefully dissected from the underlying intact muscles and care was taken not to rupture nerves and vessels. The skin was closed with a silk and the animals were returned separately into their cages. After recovering from anesthesia, the animals could move immediately without problems. All animals received an analgesic. Animals were treated for three weeks by gavage with trigonelline-hydrochloride at a daily dosage of 300mg/kg BW and the control group received vehicle.

Using this technique we have identified and quantified increased skeletal muscle weight of the plantaris and soleus muscle in the operated (pQCT-measurement) and in the gastrocnemius, plantaris and soleus muscle of the non-operated leg (weight measurement). The hypertrophy in the operated leg is a compensatory reaction of the remaining muscles after the gastrocnemius muscle has been removed. The hypertrophy on the non-operated leg is due to a special training effect, because this leg was used more.

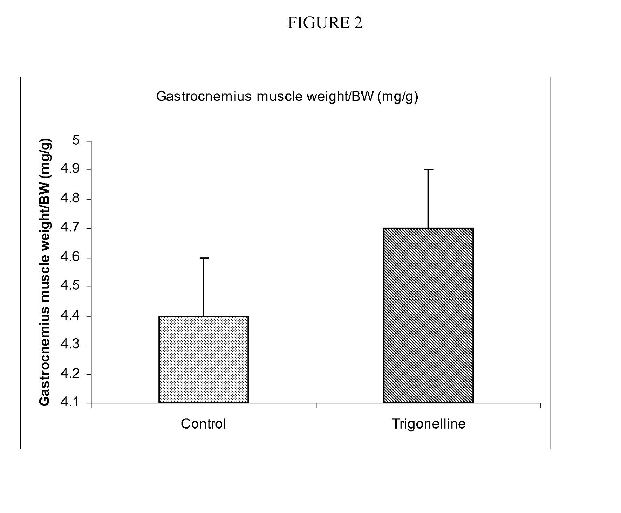

The wet weight of the non-operated gastrocnemius muscle (relative to the body weight) increased by 7% in the group receiving trigonelline (FIGURE 2).

The absolute and the relative (compared to body weight of the animals) wet weight of all analyzed muscles from the non-operated leg were increased.

In the operated leg, the total leg weight and the muscle cross-sectional area, as assessed using computer-tomography measurement were also increased. Data are shown in Table 1.

**TABLE 1**

| **Parameters** | **Control** (n=10) | **Trigonelline-hydrochloride** **300 mg/kgBW** (n=10) |
|---|---|---|
| M. gastrocnemius wet weight (mg) (non-operated leg) | 98.5 | 99.3 |
| M. plantaris wet weight (mg) (non-operated leg) | 12.4 | 13 |
| M. soleus wet weight (mg) (non-operated leg) | 7.1 | 7.2 |
| M. gastrocnemius wet weight / body weight (mg/g) (non-operated leg) | 4.44 | 4.57 |
| M. plantaris wet weight / body weight (mg/g) (non-operated leg) | 0.56 | 0.60 |
| M. soleus wet weight / body weight (mg/g) (non-operated leg) | 0.32 | 0.33 |
| Gastrocnemius-Plantaris-Soleus muscle weight (whole leg) / body weight (mg/g) (non-operated leg) | 5.32 | 5.50 |
| Total leg cross-sectional area (mm²) - non operated leg | 33.90 | 35.05 |
| Muscle cross-sectional area (mm²) - non operated leg | 26.27 | 32.15 |
| Total leg cross-sectional area (mm²) - operated leg | 25.40 | 26.79 |
| Muscle cross-sectional area (mm²) - operated leg | 19.13 | 23.72 |

These results show that under loading (after surgery of the gastrocnemius the muscle - hypertrophy)/training conditions, skeletal muscle wet weight increased in the animals.

### EXAMPLE 3

### Muscle atrophy

To extend our *in vitro* and *in vivo* results we were also interested in testing the effects of trigonelline during skeletal muscle unloading (atrophy conditions). Therefore we conducted a second *in vivo* study were the hindlimbs of the animals were unloaded to induce skeletal muscle atrophy.

Tail suspension leads to skeletal muscle atrophy in the unloaded hindlimbs of the animals. The results can be transferred to the human situation: sarcopenia (degenerative loss of skeletal muscle mass and strength during the process of ageing) or immobilization of skeletal muscle (e.g. after prolonged bed rest).

Female C57B1/6 mice were delivered at a weight of 18-20 g and acclimatized to the facilities for a period of one week. At the beginning of the study the animals were randomized into two groups (10 animals per group).

Thereafter the groups were placed in special cages and the hindlimbs were unloaded (tail suspension) for a duration of three weeks. All mice were housed separately and had access to feed and water *ad libidum.* Animals were treated for three weeks by gavage with trigonelline-hydrochloride at a daily dosage of 300 mg/kg/BW and the control group received vehicle.

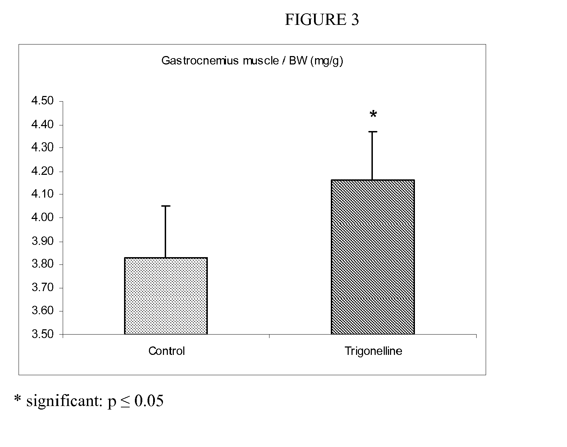

We found that the wet weight of the gastrocnemius muscle (relative to the body weight) increased by 9% (FIGURE 3), a statistically significant result.

We also compared the other two muscles from the operated hindlimb (plantaris muscle and soleus muscle). The results, presented in TABLE 2 below, show an increase of the wet weights of the muscles in animals treated with trigonelline-hydrochloride compared to the control animals (absolute muscle weight). Furthermore, when muscle weights were normalized to the body weights, animals treated with trigonelline-hydrochloride demonstrated an increased muscle weight / body weight ratio (relative muscle weight), i.e, an improved body composition. The total weight for muscles in one leg was also significantly increased when treated with trigonelline-hydrochloride (whole leg relative to body weight). Computer tomography measurements of total and muscle leg area confirmed that trigonelline-hydrochloride treatment increases skeletal muscle mass.

**TABLE 2**

| **Parameters** | **Control** (n=10) | **Trigonelline-hydrochloride** **300 mg/kgBW** (n=10) |
|---|---|---|
| M. gastrocnemius wet weight (mg) | 78.13 | 86.01 * |
| M. plantaris wet weight (mg) | 9.84 | 10.53 |
| M. soleus wet weight (mg) | 4.29 | 4.62 |
| M. gastrocnemius wet weight / body weight (mg/g) | 3.83 | 4.16 * |
| M. plantaris wet weight / body weight (mg/g) | 0.48 | 0.51 * |
| M. soleus wet weight / body weight (mg/g) | 0.21 | 0.22 |
| Gastrocnemius-Plantaris-Soleus muscle weight (whole leg) / body weight (mg/g) | 4.52 | 489 * |
| Total leg cross-sectional area (mm²) | 29.1 | 30.4 |
| Muscle cross-sectional area (mm²) | 26.6 | 27.8 |

| | | |
|---|---|---|
| * significant: p ≤ 0.05 | | |

The results show that under unloading/atrophy of the animal total leg cross-sectional area, the muscle weights increase; i.e. more of the muscle mass is retained during inactivity in trigonelline- supplemented animals versus controls.

### EXAMPLE 4

### Endurance

To test the effect of trigonelline in non-trained animals, we performed a maximal endurance test after a treatment period of three weeks.

Female C57B1/6 mice were delivered at a weight of 18-20 g and acclimatized to the facilities for a period of one week. At the beginning of the study the animals were randomized into two groups (10 animals per group). All mice were housed separately and had access to feed and water *ad libidum.* Animals were treated for three weeks by gavage with trigonelline-hydrochloride at a daily dosage of 300 mg/kg/BW and the control group received vehicle.

For acclimatization, animals were placed on the treadmill for 5 minutes after two weeks. The maximal endurance test was performed two day before the section of the animals.

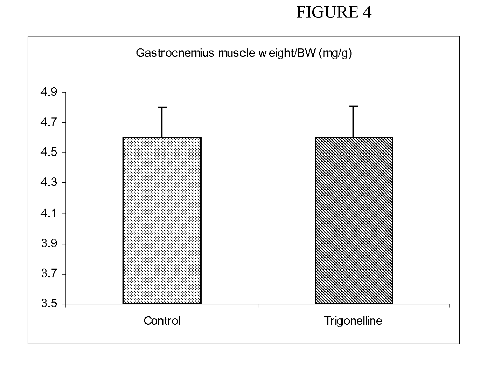

We found that the wet weight of the gastrocnemius muscle was equal in both groups (FIGURE 4), as was the wet weight of the other muscles assessed (data not shown). Also, endurance of untrained animals was not influenced by 3 weeks of trigonelline supplementation.

| **Parameters** | **Control** (n=10) | **Trigonelline-hydrochloride** **300 mg/kgBW** (n=10) |
|---|---|---|
| Mean running time (minutes) | 39.00 | 38.70 |
| M. gastrocnemius wet weight (mg) | 100.65 | 100.66 |
| M. plantaris wet weight (mg) | 12.16 | 12.12 |
| M. soleus wet weight (mg) | 6.28 | 6.29 |
| M. gastrocnemius wet weight / body weight (mg/g) | 4.64 | 4.57 |
| M. plantaris wet weight / body weight (mg/g) | 0.56 | 0.55 |
| M. soleus wet weight / body weight (mg/g) | 0.29 | 0.29 |
| Gastrocnemius-Plantaris-Soleus muscle weight (whole leg) / body weight (mg/g) | 5.49 | 5.41 |

These results show that trigonelline has no effect on endurance and skeletal muscle mass in untrained mice.

## Claims

1. Use of trigonelline and/or a salt or ester thereof, for the manufacture of a nutraceutical or food product which enhances muscle mass in combination with exercise and /or decreases the amount of muscle loss during times of lesser muscle activity.

2. Use according to Claim 1 which is for human use.

3. Use according to Claim 1 which is for veterinary use.

4. Use according to Claim 1 or 2 wherein the exercise is body building or weight training.

5. A method of increasing muscle mass in combination with exercise, or decreasing the amount of muscle mass lost during time of lesser muscle activity comprising administering trigonelline and/or a salt or ester thereof.

6. A method according to Claim 5 wherein the trigonelline and/or a salt or ester thereof is administered to a human.

7. A method according to Claim 5 wherein the trigonelline and/or salt or ester thereof is administered to a non-human animal.

8. A method according to Claim 5 or 6 wherein administration is during weight training.
